# EUROPEAN PATENT SPECIFICATION

(11) **EP 4 292 876 B1**
(45) Date of publication and mention of the grant of the patent: **03.12.2025**
(21) Application number: 22848139.6
(22) Date of filing: 24.06.2022
(51) Int. Cl.: B60N 2/28

(54) **SUPPORTING LEG POSITIONING STRUCTURE AND CHILD SAFETY SEAT**
STÜTZBEINPOSITIONIERUNGSSTRUKTUR UND KINDERSICHERHEITSSITZ
STRUCTURE DE POSITIONNEMENT DE JAMBE SUPPORT ET SIÈGE DE SÉCURITÉ POUR ENFANT

(30) Priority: 30.07.2021 CN 202121764034 U
(43) Date of publication of application: 20.12.2023
(73) Proprietor: Ningbo Baby First Baby Products Co., Ltd., Yuyao, Zhejiang 315412 (CN)
(72) Inventor: ZHOU, Xiaolin, Ningbo, Zhejiang 315412 (CN); CHENG, Fei, Ningbo, Zhejiang 315412 (CN); YANG, Gang, Ningbo, Zhejiang 315412 (CN)
(74) Representative: Lorenz Seidler Gossel Part. mbB
(86) International application number: PCT/CN2022/101078
(87) International publication number: WO 2023/005532

(56) References cited:
- WO-A1-2020/168131
- CN-U- 206 983 792
- CN-U- 210 212 127
- CN-U- 211 543 324
- CN-U- 216 139 881
- US-A- 4 113 306

## Description

### TECHNICAL FIELD

The present invention relates to the technical field of child safety seats, and particularly to a support leg positioning structure and a child safety seat including the same.

### BACKGROUND

With the improvement of people's awareness of driving safety, child safety seats have become a must-have for infants and children in vehicles. To prevent the child safety seat from moving due to inertia in a case such as sudden braking, a support leg is generally arranged at the front end of the base of the child safety seat. The support leg can be folded up when the child safety seat does not need to be used. However, support legs of existing child safety seats are not equipped with a locking structure, and when the support leg is unfolded, the support leg may shake uncontrollably and fail to provide the reliable support, resulting in low safety.

Document US 4 113 306 A shows a support leg positioning structure according to the preamble of claim 1.

### SUMMARY

To solve at least one of the above problems, the present invention first provides a support leg positioning structure, including a folding/unfolding positioning assembly, a connecting assembly, and a support leg hingedly connected to the connecting assembly, where the folding/unfolding positioning assembly includes a first positioning member and a second positioning member configured to engage with each other, the first positioning member is movably connected to the connecting assembly, a first end of the second positioning member is connected to the support leg, a second end of the second positioning member is hingedly connected to the connecting assembly, and when the support leg is in an unfolded position, the first positioning member and the second positioning member are locked to each other.

According to the present invention, the connecting assembly includes a lower cover and a fixing plate connected to each other, the first positioning member is connected to the lower cover, and the second positioning member is connected to the fixing plate. Further, the first positioning member is provided with a slotted hole, and the lower cover is provided with a protruding column configured for movably engaging with the slotted hole.

Optionally, the second positioning member is provided with a rectangular slot connected to the support leg.

Optionally, a restoring spring is arranged between the first positioning member and the lower cover.

Optionally, the second positioning member is connected to a rotating shaft rotatably connected to the fixing plate.

Optionally, the second positioning member is provided with a first abutting surface, a second abutting surface, and a cam surface arranged between the first abutting surface and the second abutting surface; and the first abutting surface, the second abutting surface, and the cam surface respectively abut against the first positioning member when the support leg is in different positions.

Optionally, the first abutting surface and the second abutting surface are planes perpendicular to each other.

Compared with the prior art, in the support leg positioning structure of the present invention, with the arrangement of the folding/unfolding positioning assembly between the connecting assembly and the support leg, the support leg can be locked with the connecting assembly when the support leg is in the unfolded position, and also, the position of the support leg will not be changed even under a larger external impact, thereby effectively supporting the child safety seat to ensure the safety of a child in the child safety seat on a vehicle. The folding/unfolding positioning assembly is designed as the first positioning member and the second positioning member that can be locked to each other when the support leg is in the unfolded position, and the first positioning member and the second positioning member are respectively connected to the connecting assembly and the support leg, so that the support leg and the connecting assembly can be locked to each other. Such a design features a simple structure and convenient and reliable operation.

In addition, the present invention provides a child safety seat, including the support leg positioning structure described above.

Compared with the prior art, the child safety seat of the present invention has the same advantages as those of the support leg positioning structure compared with the prior art, so no more details will be described herein.

### BRIEF DESCRIPTION OF THE DRAWINGS

FIG. 1 is a cross-sectional view of a support leg positioning structure according to an embodiment of the present invention when a support leg is in a folded position.
FIG. 2 is an enlarged view of part A in FIG. 1.
FIG. 3 is a cross-sectional view of a support leg positioning structure according to an embodiment of the present invention when a support leg is changed from a folded position to an unfolded position.
FIG. 4 is an enlarged view of part B in FIG. 3.
FIG. 5 is a cross-sectional view of a support leg positioning structure according to an embodiment of the present invention when a support leg is in an unfolded position.
FIG. 6 is an enlarged view of part C in FIG. 5.
FIG. 7 is a bottom view of a support leg positioning structure according to an embodiment of the present invention when a support leg is changed from a folded position to an unfolded position.
FIG. 8 is an exploded view of a folding/unfolding positioning assembly according to an embodiment of the present invention.
FIG. 9 is a structural view of a second positioning member according to an embodiment of the present invention.

List of reference numerals:
1. folding/unfolding positioning assembly; 11. first positioning member; 111. slotted hole; 12. second positioning member; 121. rectangular slot; 122. first abutting surface; 123. second abutting surface; 124. cam surface; 13. restoring spring; 14. rotating shaft; 2. connecting assembly; 21. upper cover; 22. lower cover; 221. protruding column; 23. fixing plate; 3. support leg.

### DETAILED DESCRIPTION OF THE EMBODIMENTS

To make the objectives, technical features, and advantages of the present invention more comprehensible, specific embodiments of the present invention will be described in detail below with reference to the accompanying drawings.

In the description of the present invention, it should be understood that orientation or position relationships indicated by the terms such as "upper" and "lower" are orientation or position relationships based on the normal use of the product.

The terms "first" and "second" are used herein for purposes of description, and are not intended to indicate or imply relative importance or implicitly point out the number of the indicated technical feature. Therefore, the features defined by "first" and "second" may explicitly or implicitly include one or more features.

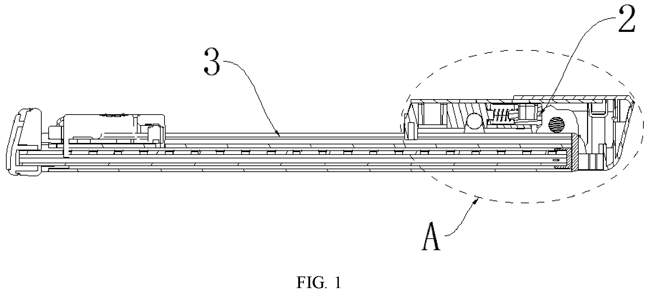

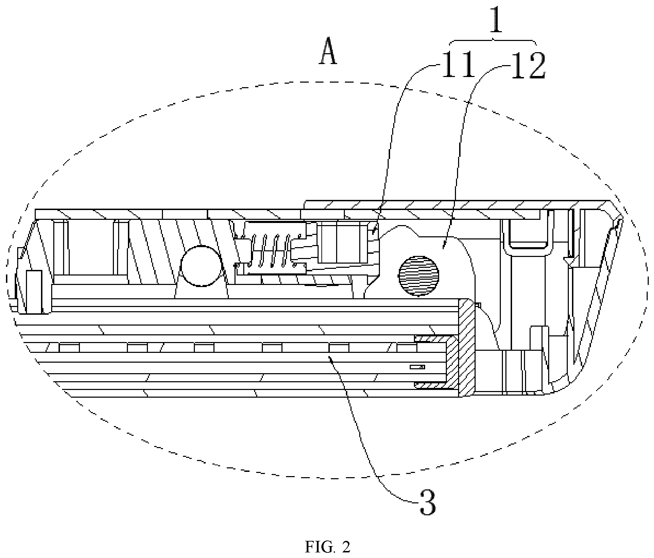

An embodiment of the present invention provides a support leg positioning structure. Referring to FIG. 1, FIG. 2, FIG. 5, and FIG. 6, the support leg positioning structure includes a folding/unfolding positioning assembly 1, a connecting assembly 2, and a support leg 3 hingedly connected to the connecting assembly 2. The folding/unfolding positioning assembly 1 includes a first positioning member 11 and a second positioning member 12 configured to engage with each other. The first positioning member 11 is movably connected to the connecting assembly 2. A first end of the second positioning member 12 is connected to the support leg 3. A second end of the second positioning member 12 is hingedly connected to the connecting assembly 2. When the support leg 3 is in an unfolded position, the first positioning member 11 and the second positioning member 12 are locked to each other.

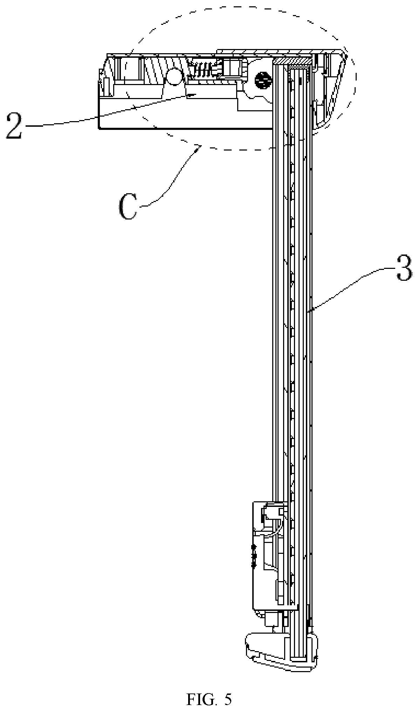

The support leg 3 is connected to a base of a child safety seat through the connecting assembly 2, one end of the support leg 3 is hingedly connected to the connecting assembly 2, and the other end of the support leg 3 is rotatable about the hinge point between the support leg 3 and the connecting assembly 2. The support leg 3 has a folded position (as shown in FIG. 1) and an unfolded position (as shown in FIG. 5). The support leg 3 is switched to the folded position when the child safety seat is not in use. The support leg 3 is switched to the unfolded position when the child safety seat is installed on a vehicle for use.

The second positioning member 12 is fixedly connected to the support leg 3, and when the support leg 3 rotates relative to the connecting assembly 2, the second positioning member 12 also rotates synchronously relative to the connecting assembly 2. During rotation, the second positioning member 12 can push the first positioning member 11 to move relative to the connecting assembly 2. When the support leg 3 is switched to the unfolded position, the second positioning member 12 and the first positioning member 11 are locked to each other, so that the support leg 3 in the unfolded position does not shake uncontrollably relative to the connecting assembly 2. The second positioning member 12 always abuts against the first positioning member 11 during rotation.

In the support leg positioning structure of this embodiment, with the arrangement of the folding/unfolding positioning assembly 1 between the connecting assembly 2 and the support leg 3, the support leg 3 can be locked with the connecting assembly 2 when the support leg 3 is in the unfolded position, and also, the position of the support leg 3 will not be changed even under larger external impact, thereby effectively supporting the child safety seat to ensure the safety of a child in the child safety seat on a vehicle. The folding/unfolding positioning assembly 1 is designed as the first positioning member 11 and the second positioning member 12 that can be locked to each other when the support leg 3 is in the unfolded position, and the first positioning member 11 and the second positioning member 12 are respectively connected to the connecting assembly 2 and the support leg 3, so that the support leg 3 and the connecting assembly 2 can be locked to each other. Such a design features a simple structure and convenient and reliable operation.

Optionally, as shown in FIG. 1, FIG. 2, and FIG. 9, the second positioning member 12 is provided with a rectangular slot 121 connected to the support leg 3.

The second positioning member 12 is of a sheet-like structure. Two second positioning members 12 are provided, and the two second positioning members 12 are respectively arranged on two sides of a top end of the support leg 3, to achieve a better locking effect between the second positioning members 12 and the first positioning member 11. Rectangular bumps (not shown) respectively configured to engage with the rectangular slots 121 are respectively arranged on the two sides of the top end of the support leg, to realize the fixed connection between the second positioning members 12 and the support leg 3, thereby ensuring that the support leg 3 and the second positioning members 12 can rotate synchronously.

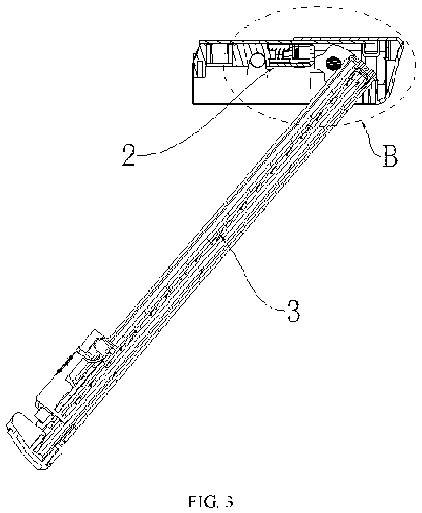

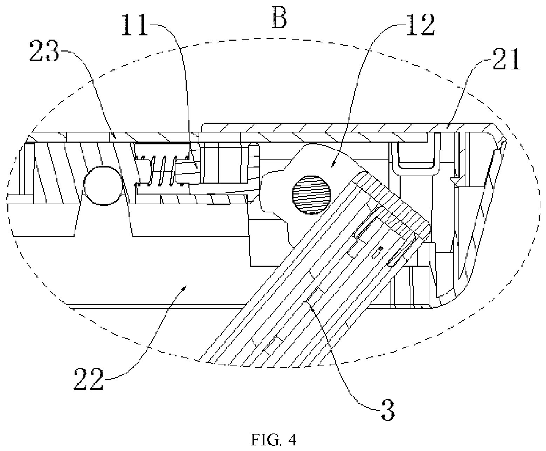

According to the invention, as shown in FIG. 3 and FIG. 4, the connecting assembly 2 includes a lower cover 22 and a fixing plate 23 connected to each other, the first positioning member 11 is connected to the lower cover 22, and the second positioning member 12 is connected to the fixing plate 23.

A chamber for mounting the first positioning member 11 is provided between the lower cover 22 and the fixing plate 23. The lower cover 22 is provided with a through hole for the second positioning member 12 to pass through. The chamber is in communication with the through hole to facilitate the engagement between the first positioning member 11 and the second positioning member 12. The lower cover 22 is preferably made of plastic, and the fixing plate 23 is preferably made of metal, to minimize the overall weight of the child safety seat while ensuring the deformation resistance of the connecting assembly 2. The connecting assembly 2 further includes an upper cover 21, and the upper cover 21 and the lower cover 22 are fixedly connected to each other through a fastener. The first positioning member 11 is movably connected to the lower cover 22, and the second positioning member 12 is hingedly connected to the fixing plate 23 through a pin shaft. During rotation, the second positioning member 12 can push the first positioning member 11 to move.

Optionally, as shown in FIG. 5, FIG. 6, and FIG. 8, a restoring spring 13 is arranged between the first positioning member 11 and the lower cover 22.

The restoring spring 13 is a compression spring. The lower cover 22 is provided with a first spring mounting column. The first positioning member 11 is provided with a second spring mounting column. Two ends of the restoring spring 13 are respectively connected to the first spring mounting column and the second spring mounting column to ensure that the restoring spring 13 can be stably mounted between the first positioning member 11 and the lower cover 22. In this embodiment, with the arrangement of the restoring spring 13 between the first positioning member 11 and the lower cover 22, when the first positioning member 11 is pushed by the second positioning member 12, the restoring spring 13 is compressed, to ensure the smooth movement of the first positioning member 11 and the smooth rotation of the second positioning member 12; and when the second positioning member 12 does not operate, the restoring spring 13 can push the first positioning member 11 and the second positioning member 12 to be locked to each other, thereby ensuring that the support leg 3 can be locked in the unfolded position.

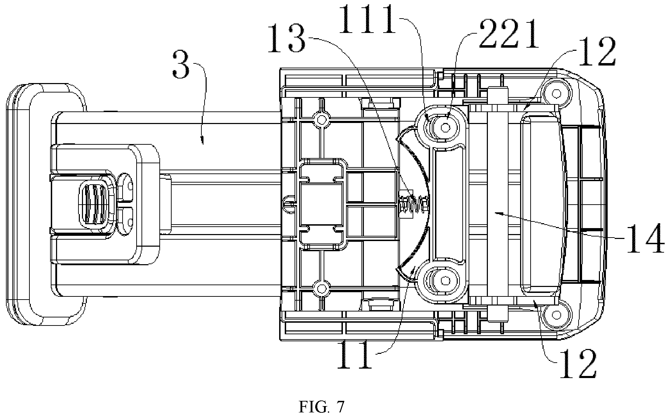

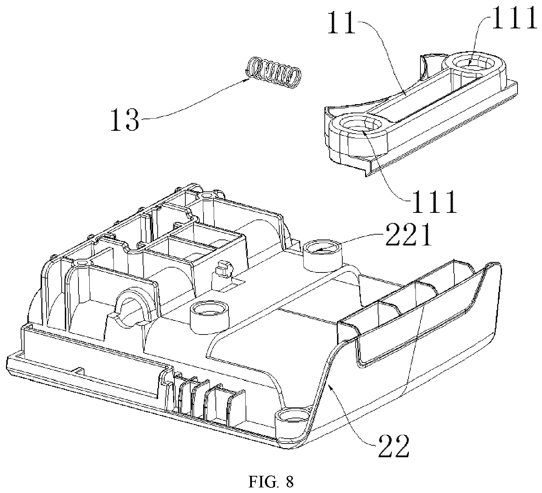

According to the invention, as shown in FIG. 7 and FIG. 8, the first positioning member 11 is provided with a slotted hole 111, and the lower cover 22 is provided with a protruding column 221 configured for movably engaging with the slotted hole 111.

Two slotted holes 111 are provided, and correspondingly, two protruding columns 221 are also provided. The two slotted holes 111 are respectively arranged at two ends of the first positioning member 11, to achieve a more stable movement of the first positioning member 11 relative to the lower cover 22. A length direction of the slotted hole 111 is consistent with the movement direction of the first positioning member 11. When the second positioning member 12 rotates, the first positioning member 11 moves and presses the restoring spring 13. After the second positioning member 12 and the first positioning member 11 are locked to each other, the restoring spring 13 restores and stretches, and pushes the first positioning member 11 to tightly press the second positioning member 12.

In this embodiment, the arrangement of the structure in which the slotted holes 111 are engaged with the protruding columns 221 achieves a more reliable movement of the first positioning member 11 relative to the lower cover 22, and can prevent the first positioning member 11 from detaching from the lower cover 22 during movement.

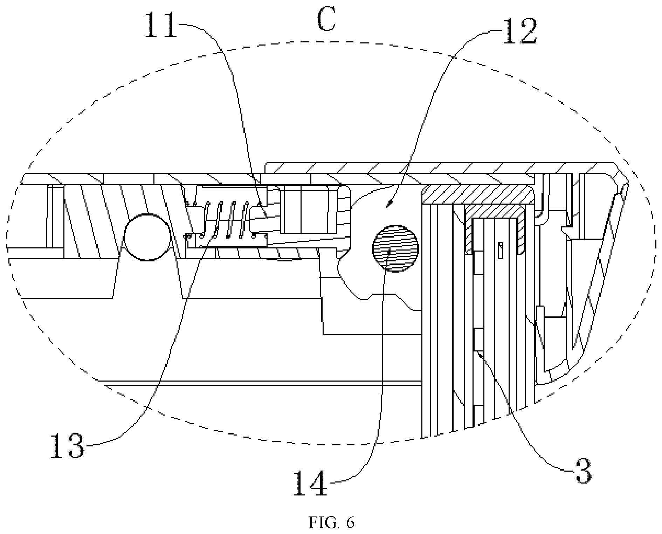

Optionally, as shown in FIG. 4 and FIG. 6, the second positioning member 12 is connected to a rotating shaft 14 rotatably connected to the fixing plate 23.

The first end of the second positioning member 12 is fixedly connected to the support leg 3, the second end of the second positioning member 12 is connected to the rotating shaft 14, and the rotating shaft 14 is rotatably connected to the fixing plate 23, so that the second positioning member 12 and the support leg 3 can rotate relative to the fixing plate 23. Two second positioning members 12 are provided. The two second positioning members 12 are respectively arranged on the two sides of the top end of the support leg 3, and two ends of the rotating shaft 14 are respectively connected to the two second positioning members 12.

Optionally, as shown in FIG. 1, FIG. 3, FIG. 5 and FIG. 9, the second positioning member 12 is provided with a first abutting surface 122, a second abutting surface 123, and a cam surface 124 arranged between the first abutting surface 122 and the second abutting surface 123; and the first abutting surface 122, the second abutting surface 123, and the cam surface 124 respectively abut against the first positioning member 11 when the support leg 3 is in different positions.

An outer contour of the second positioning member 12 is sequentially provided with the first abutting surface 122, the cam surface 124, and the second abutting surface 123. The first abutting surface 122 abuts against the first positioning member 11 when the support leg is in the unfolded position. The second abutting surface 123 abuts against the first positioning member 11 when the support leg is in the folded position. The cam surface 124 abuts against the first positioning member 11 during the support leg changing from the unfolded position to the folded position or from the folded position to the unfolded position. A distance between the cam surface 124 and the rotating shaft 14 is greater than a distance between the first abutting surface 122 or the second abutting surface 123 and the rotating shaft 14, to ensure that the second positioning member 12 can push the first positioning member 11 to move during the support leg changing from the unfolded position to the folded position or from the folded position to the unfolded position. The first abutting surface 122 and the second abutting surface 123 are planes, and a portion of the first positioning member 11 for contact with the first abutting surface 122 and the second abutting surface 123 is also a plane, to ensure that the first positioning member 11 and the second positioning member 12 can be locked to each other when the first abutting surface 122 abuts against the first positioning member 11 or when the second abutting surface 123 abuts against the first positioning member 11.

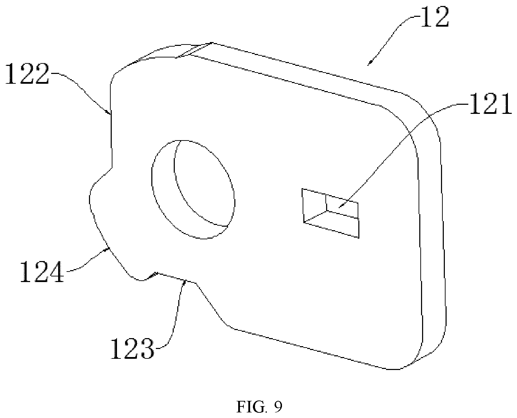

Optionally, as shown in FIG. 9, the first abutting surface 122 and the second abutting surface 123 are planes perpendicular to each other.

The design of the first abutting surface 122 and the second abutting surface 123 as planes perpendicular to each other can realize the vertical support of the support leg 3 and the storage of the support leg 3 in place. The cam surface 124 is an arc surface. The first abutting surface 122, the second abutting surface 123, and the cam surface 124 are connected through smooth transitions, so that the position of the support leg 3 can be changed more smoothly.

When the support leg 3 is unfolded from the folded position, the support leg 3 is unfolded and rotated through the rotating shaft 14, and the second positioning members 12 on the two sides of the support leg 3 press the first positioning member 11 backward to compress the restoring spring 13. When the support leg 3 is rotated to the unfolded position, the first positioning member 11 is automatically aligned with the first abutting surfaces 122 of the second positioning members 12 under the action of the restoring spring 13, to lock the support leg 3 in the unfolded state. In this way, when an accident occurs, the unfolding angle of the support leg 3 will not be easily changed, and the child safety seat can be better supported, thereby protecting the child in the child safety seat. When the support leg 3 is folded from the unfolded position, the support leg 3 is folded and rotated through the rotating shaft 14, and the second positioning members 12 on the two sides of the support leg 3 press the first positioning member 11 backward to compress the restoring spring 13. When the support leg 3 is rotated to the folded position, the first positioning member 11 is automatically aligned with the second abutting surfaces 123 of the second positioning members 12 under the action of the restoring spring 13, to lock the support leg 3 in the folded state.

Another embodiment of the present invention provides a child safety seat, including the support leg positioning structure described above.

In the child safety seat of this embodiment, with the arrangement of the folding/unfolding positioning assembly 1 between the connecting assembly 2 and the support leg 3, the support leg 3 can be locked with the connecting assembly 2 when the support leg 3 is in the unfolded position, and also, the position of the support leg 3 will not be changed even under larger external impact, thereby effectively supporting the child safety seat to ensure the safety of a child in the child safety seat on a vehicle. The folding/unfolding positioning assembly 1 is designed as the first positioning member 11 and the second positioning member 12 that can be locked to each other when the support leg 3 is in the unfolded position, and the first positioning member 11 and the second positioning member 12 are respectively connected to the connecting assembly 2 and the support leg 3, so that the support leg 3 and the connecting assembly 2 can be locked to each other. Such a design features a simple structure and convenient and reliable operation.

## Claims

1. A support leg positioning structure, comprising a folding/unfolding positioning assembly (1), a connecting assembly (2), and a support leg (3) hingedly connected to the connecting assembly (2), wherein the folding/unfolding positioning assembly (1) comprises a first positioning member (11) and a second positioning member (12) configured to engage with each other, the first positioning member (11) is movably connected to the connecting assembly (2), a first end of the second positioning member (12) is connected to the support leg (3), a second end of the second positioning member (12) is hingedly connected to the connecting assembly (2), and when the support leg (3) is in an unfolded position, the first positioning member (11) and the second positioning member (12) are locked to each other,
wherein the connecting assembly (2) comprises a lower cover (22) and a fixing plate (23) connected to each other, the first positioning member (11) is connected to the lower cover (22), and the second positioning member (12) is connected to the fixing plate (23),
**characterized in that**
the first positioning member (11) is provided with a slotted hole (111), and the lower cover (22) is provided with a protruding column (221) configured for movably engaging with the slotted hole (111).

2. The support leg positioning structure according to claim 1, wherein the second positioning member (12) is provided with a rectangular slot (121) connected to the support leg (3).

3. The support leg positioning structure according to claim 1, wherein a restoring spring (13) is arranged between the first positioning member (11) and the lower cover (22).

4. The support leg positioning structure according to claim 1, wherein the second positioning member (12) is connected to a rotating shaft (14) rotatably connected to the fixing plate (23).

5. The support leg positioning structure according to any one of claims 1 to 4, wherein the second positioning member (12) is provided with a first abutting surface (122), a second abutting surface (123), and a cam surface (124) arranged between the first abutting surface (122) and the second abutting surface (123); and the first abutting surface (122), the second abutting surface (123), and the cam surface (124) respectively abut against the first positioning member (11) when the support leg (3) is in different positions.

6. The support leg positioning structure according to claim 5, wherein the first abutting surface (122) and the second abutting surface (123) are planes perpendicular to each other.

7. A child safety seat, comprising the support leg positioning structure according to any one of claims 1 to 6.

## Patentansprüche

1. Stützbein-Positionierungsstruktur, umfassend eine zusammenklappbare/ausklappbare Positionierungsanordnung (1), eine Verbindungsanordnung (2) und ein Stützbein (3), das gelenkig mit der Verbindungsanordnung (2) verbunden ist, wobei die zusammenklappbare/ausklappbare Positionierungsanordnung (1) ein erstes Positionierungselement (11) und ein zweites Positionierungselement (12), die so konfiguriert sind, dass sie miteinander in Eingriff kommen, umfasst, wobei das erste Positionierungselement (11) beweglich mit der Verbindungsanordnung (2) verbunden ist, ein erstes Ende des zweiten Positionierungselements (12) mit dem Stützbein (3) verbunden ist, ein zweites Ende des zweiten Positionierungselements (12) gelenkig mit der Verbindungsanordnung (2) verbunden ist, und das erste Positionierungselement (11) und das zweite Positionierungselement (12) miteinander verriegelt sind, wenn sich das Stützbein (3) in einer ausgeklappten Position befindet,
wobei die Verbindungsanordnung (2) eine untere Abdeckung (22) und eine Befestigungsplatte (23), die miteinander verbunden sind, umfasst, und wobei das erste Positionierungselement (11) mit der unteren Abdeckung (22) verbunden ist und das zweite Positionierungselement (12) mit der Befestigungsplatte (23) verbunden ist,
**dadurch gekennzeichnet, dass**
das erste Positionierungselement (11) mit einem Langloch (111) versehen ist und die untere Abdeckung (22) mit einer vorstehenden Säule (221) versehen ist, die so konfiguriert ist, dass sie beweglich in das Langloch (111) eingreift.

2. Stützbein-Positionierungsstruktur nach Anspruch 1, wobei das zweite Positionierungselement (12) mit einem rechteckigen Schlitz (121) versehen ist, der mit dem Stützbein (3) verbunden ist.

3. Stützbein-Positionierungsstruktur nach Anspruch 1, wobei zwischen dem ersten Positionierungselement (11) und der unteren Abdeckung (22) eine Rückstellfeder (13) angeordnet ist.

4. Stützbein-Positionierungsstruktur nach Anspruch 1, wobei das zweite Positionierungselement (12) mit einer Drehwelle (14) versehen ist, die drehbar mit der Befestigungsplatte (23) verbunden ist.

5. Stützbein-Positionierungsstruktur nach einem der Ansprüche 1 bis 4, wobei das zweite Positionierungselement (12) mit einer ersten Anlagefläche (122), einer zweiten Anlagefläche (123) und einer Nockenfläche (124), die zwischen der ersten Anlagefläche (122) und der zweiten Anlagefläche (123) angeordnet ist, versehen ist, und wobei die erste Anlagefläche (122), die zweite Anlagefläche (123) und die Nockenfläche (124) jeweils an dem ersten Positionierungselement (11) anliegen, wenn sich das Stützbein (3) in verschiedenen Positionen befindet.

6. Stützbein-Positionierungsstruktur nach Anspruch 5, wobei die erste Anlagefläche (122) und die zweite Anlagefläche (123) senkrecht zueinander verlaufende Ebene sind.

7. Kindersicherheitssitz, umfassend eine Stützbein-Positionierungsstruktur nach einem der Ansprüche 1 bis 6.

## Revendications

1. Structure de positionnement de jambe de support, comprenant un ensemble de positionnement pliant/dépliant (1), un ensemble de liaison (2), et une jambe de support (3) reliée par articulation à l' ensemble de liaison (2), dans laquelle l' ensemble de positionnement pliant/dépliant (1) comprend un premier élément de positionnement (11) et un deuxième élément de positionnement (12) configurés pour s' engager l' un avec l' autre, le premier élément de positionnement (11) est relié de manière mobile à l' ensemble de liaison (2), une première extrémité du deuxième élément de positionnement (12) est reliée à la jambe de support (3), une deuxième extrémité du deuxième élément de positionnement (12) est reliée par articulation à l' ensemble de liaison (2), et lorsque la jambe de support (3) est dans une position dépliée, le premier élément de positionnement (11) et le deuxième élément de positionnement (12) sont verrouillés l' un à l' autre,
dans lequel l' ensemble de liaison (2) comprend un couvercle inférieur (22) et une plaque de fixation (23) reliés l' un à l' autre, le premier élément de positionnement (11) est relié au couvercle inférieur (22), et le deuxième élément de positionnement (12) est relié à la plaque de fixation (23),
**caractérisée en ce que**,
le premier élément de positionnement (11) est pourvu d' un trou à fente (111), et le couvercle inférieur (22) est pourvu d' une colonne saillante (221) configurée pour s' engager de manière mobile avec le trou à fente (111).

2. Structure de positionnement de jambe de support selon la revendication 1, dans laquelle le deuxième élément de positionnement (12) est pourvu d' une fente rectangulaire (121) reliée à la jambe de support (3).

3. Structure de positionnement de jambe de support selon la revendication 1, dans laquelle un ressort de rappel (13) est disposé entre le premier élément de positionnement (11) et le couvercle inférieur (22).

4. Structure de positionnement de jambe de support selon la revendication l, dans laquelle le deuxième élément de positionnement (12) est relié à un arbre rotatif (14) relié de manière rotative à la plaque de fixation (23).

5. Structure de positionnement de jambe de support selon l' une quelconque des revendications 1 à 4, dans laquelle le deuxième élément de positionnement (12) est pourvu d' une première surface d' aboutement (122), d' une deuxième surface d' aboutement (123) et d' une surface de came (124) disposée entre la première surface d' aboutement (122) et la deuxième surface d' aboutement (123) ; et la première surface d' aboutement (122), la deuxième surface d' aboutement (123) et la surface de came (124) sont respectivement aboutées contre le premier élément de positionnement (11) lorsque la jambe de support (3) est dans différentes positions.

6. Structure de positionnement de jambe de support selon la revendication 5, dans laquelle la première surface d' aboutement (122) et la deuxième surface d' aboutement (123) sont des plans perpendiculaires l' un à l' autre.

7. Siège de sécurité pour enfant, comprenant la structure de positionnement de jambe de support selon l' une quelconque des revendications 1 à 6.
